# EUROPÄISCHE PATENTANMELDUNG

(11) **EP 0 922 721 A1**
(43) Veröffentlichungstag der Anmeldung: **16.06.1999**
(21) Anmeldenummer: 98120367.2
(22) Anmeldetag: 28.10.1998
(51) Int. Cl.: C08G 18/73, C08G 18/75

(54) **Reaktionsmischung und Verfahren zur Herstellung von Polyisocyanat-Polyadditionsprodukten**

(30) Priorität: 10.12.1997 DE 19754600
(71) Anmelder: BASF AKTIENGESELLSCHAFT, 67056 Ludwigshafen (DE)
(72) Erfinder: Hirt, Peter Dr., 73614 Schorndorf (DE); Leberfinger, Marcus Dr., 49448 Hüde (DE); Oppermann, Wilhelm Dr., 71083 Herrenberg (DE); Hermanutz, Frank Dr., 71229 Leonberg (DE); Oess, Oliver, 70499 Stuttgart (DE); Lange, Martin, 49377 Vechta (DE)

(57) **Zusammenfassung**

Reaktionsmischung enthaltend (a) Isocyanate, (b) gegenüber Isocyanate reaktive Verbindungen mit einer mittleren Funktionalität von 1,8 bis 2,5 und einem Molekulargewicht von 500 bis 8000 g/mol und gegebenenfalls (c) Kettenverlängerungmittel mit einem Molekulargewicht von kleiner 500 g/mol, (d) Katalysatoren und/oder (e) übliche Hilfs- und/oder Zusatzstoffe, dadurch gekennzeichnet, daß die Isocyanate (a) aliphatische und/oder cycloaliphatische Isocyanate enthalten und das Verhältnis der Isocyanatgruppen enthalten in (a) zu den gegenüber Isocyanaten reaktiven Gruppen enthalten in (b) plus gegebenenfalls (c) 1 : 0,98 bis 1 : 0,8 beträgt.

## Beschreibung

Die Erfindung betrifft Reaktionsmischungen enthaltend (a) Isocyanate, (b) gegenüber Isocyanate reaktive Verbindungen mit einer mittleren Funktionalität von 1,8 bis 2,5 und einem Molekulargewicht von 500 bis 8000 g/mol und gegebenenfalls (c) Kettenverlängerungsmittel mit einem Molekulargewicht von kleiner 500 g/mol, (d) Katalysatoren und/oder (e) übliche Hilfs- und/oder Zusatzstoffe. Des weiteren bezieht sich die Erfindung auf Verfahren zur Herstellung von Polyisocyanat-Polyadditionsprodukten durch Umsetzung von (a) Isocyanaten mit (b) gegenüber Isocyanaten reaktiven Verbindungen mit einer mittleren Funktionalität von 1,8 bis 2,5 und einem Molekulargewicht von 500 bis 8000 g/mol und gegebenenfalls (c) Kettenverlängerungsmitteln mit einem Molekulargewicht von kleiner 500 g/mol, (d) Katalysatoren und/oder (e) üblichen Hilfs- und/oder Zusatzstoffen sowie Polyisocyanat-Polyadditionsprodukte, die durch ein solches Verfahren erhältlich sind.

Die Herstellung von Polyisocyanat-Polyadditionsprodukten, beispielsweise thermoplastischen Polyurethanen, die im Folgenden auch als TPU abgekürzt werden, ist allgemein bekannt.

TPU sind teilkristalline Werkstoffe und gehören zu der Klasse der thermoplastischen Elastomere. Charakteristisch für Polyurethan-Elastomere ist der segmentierte Aufbau der Makromoleküle. Aufgrund der unterschiedlichen Kohäsionsenergiedichten dieser Segmente erfolgt im idealen Fall eine Phasentrennung in kristalline "harte" und amorphe "weiche" Bereiche. Die resultierende Zweiphasenstruktur bestimmt das Eigenschaftsprofil von Produkten, die aus diesen Polyurethansystemen hergestellt werden. Die Weichphase ist aufgrund der Entropieelastizität der langkettigen Weichsegmente für die Elastizität und die Hartphase für die Festigkeit, Form- und Temperaturbeständigkeit der Polyurethanfasern verantwortlich. In der Hartphase sind die Polymerketten über intermolekulare Wechselwirkungen der Hartsegmente fixiert. Es liegt ein hauptsächlich aus Wasserstoffbrücken bestehendes physikalisches Netzwerk vor. Unter mechanischer Belastung werden diese Wechselwirkungen teilweise überwunden, so daß, es innerhalb der Hartphase zu irreversiblen Umstrukturierungen der Hartsegmente kommt. Dies wirkt sich negativ auf das Hystereseverhalten aus. Besonders schmelzgesponnene Polyurethanfasern zeigen hier große Arbeits- und Kraftverluste sowie hohe Restdehnungen. Zur Verbesserung der Fasereigenschaften ist deshalb eine bessere Fixierung der Hartsegmente notwendig. Des weiteren zeigen bekannte TPU auf der Basis von aromatischen Isocyanaten bei Bestrahlung und Lagerung eine unerwünschte Tendenz zur Verfärbung.

Der vorliegenden Erfindung lag deshalb die Aufgabe zugrunde, eine Reaktionsmischung enthaltend (a) Isocyanate, (b) gegenüber Isocyanate reaktive Verbindungen mit einer mittleren Funktionalität von 1,8 bis 2,5 und einem Molekulargewicht von 500 bis 8000 g/mol und gegebenenfalls (c) Kettenverlängerungsmittel mit einem Molekulargewicht von kleiner 500 g/mol, (d) Katalysatoren und/oder (e) übliche Hilfs- und/oder Zusatzstoffe zu entwickeln, die zur Herstellung von Polyisocyanat-Polyadditionsprodukte durch Umsetzung der oben genannten Komponenten geeignet ist. Die Polyisocyanat-Polyadditionsprodukte sollten insbesondere eine verbesserte Temperaturstabilität, meßbar anhand der heat-distortion-temperature und ein verbessertes Hystereseverhalten nach Belastung aufweisen sowie lichtstabil sein.

Diese Aufgabe konnte erfindungsgemäß dadurch gelöst werden, daß die Isocyanate (a) aliphatische und/oder cycloaliphatische Isocyanate enthalten und das Verhältnis der Isocyanatgruppen enthaltend in (a) zu den gegenüber Isocyanaten reaktiven Gruppen enthaltend in (b) plus gegebenenfalls (c) 1 : 0,98 bis 1 : 0,8 beträgt.

In der Reaktionsmischung wird erfindungsgemäß ein Überschuß an Isocyanatgruppen über die Gruppen, die gegenüber den Isocyanatgruppen reaktiv sind, eingesetzt. Dieser Überschuß läßt sich in dem molaren Verhältnis der gegenüber Isocyanaten reaktiven Gruppen in den Komponenten (b) plus (c) zu den Isocyanatengruppen in der Komponente (a) ausdrücken. Dieses Verhältnis beträgt erfindungsgemäß 1 : 0,98 bis 1 : 0,8, bevorzugt 1 : 0,95 bis 1 : 0,85. Durch diesen Überschuß an Isocyanatgruppen wird erreicht, daß diese Isocyanatgruppen während und gegebenenfalls nach der Bildung der Urethangruppen durch Umsetzung von (a) mit (b) und gegebenenfalls (c) Vernetzungen in Form von beispielsweise Allophanat- und/oder Isocyanuratstrukturen ausbilden, die zu den verbesserten Eigenschaften der Polyisocyanat-Polyadditionsprodukte führen. Die Bildung der Vernetzungen kann gegebenenfalls durch Zugabe von Katalysatoren, z.B. Alkaliacetate oder Formiate, die zu diesem Zweck, allgemein bekannt sind, gefördert werden, wobei eine Verarbeitung des Umsetzungsproduktes, d.h. der Polyisocyanat-Polyadditionsprodukte, zu den gewünschten Folien, Formkörpern Spritzgußartikeln, Schläuchen, Kabelummantellungen und/oder Fasern bevorzugt bei und/oder direkt nach der Bildung der Urethangruppen und vor einer vollständigen Umsetzung der Reaktionsmischung erfolgen sollte, da eine thermoplastische Verarbeitung der Polyisocyanat-Polyadditionsprodukte zu Folien, Formkörpern oder Fasern bevorzugt bei niedrigen Temperaturen vor und/oder während der Ausbildung der Vernetzungen durchgeführt wird. Als Isocyanate werden erfindungsgemäß aliphatische und/oder cycloaliphatische Isocyanate, bevorzugt Diisocyanate, besonders bevorzugt Hexamethylendiisocyanat eingesetzt. Diese erfindungsgemäßen Isocyanate können gegebenenfalls in Kombination mit üblichen weiteren Isocyanaten, beispielsweise bekannten aromatischen Isocyanaten eingesetzt werden. Bevorzugt werden 50 bis 100 %, besonders bevorzugt 75 bis 100 % der als (a) eingesetzten Isocyanatgruppen in Form von aliphatischen Isocyanaten eingesetzt.

Die Umsetzung der erfindungsgemäßen Reaktionsmischung in dem Verfahren zur Herstellung von Polyisocyanat-Polyadditionsprodukten können nach bekannten Verfahren, beispielsweise dem one-shot-Verfahren oder dem Prepolymerverfahren, beispielsweise durch Umsetzung eines NCO-haltigen Prepolymers, das aus (a) und Teilen der Komponenten (b) und gegebenenfalls (c) hergestellt werden kann, mit dem restlichen (b) und gegebenenfalls (c), auf einer üblichen Bandanlage, mit einem bekannten Reaktionsextruder oder für diesen Zweck bekannten Anlagen erfolgen. Die Temperatur bei dieser Umsetzung beträgt üblicherweise 60 bis 250°C, bevorzugt 60 bis 180 °C, besonders bevorzugt 70 bis 120 °C.

Während und gegebenenfalls nach der Bildung der Urethangruppen durch Umsetzung von (a) mit (b) und gegebenenfalls (c) können die Umsetzungsprodukte pelletiert, granuliert oder nach allgemein bekannten Verfahren, beispielsweise durch Extrusion in bekannten Extrudern, durch Spritzguß in üblichen Spritzgußmaschinen oder durch allgemein bekannte Spinnverfahren, beispielsweise durch Schmelzverspinnen, zu Formkörpern aller Art, Folien oder, im Falle der Spinnverfahren, zu Fasern verarbeitet werden.

Bevorzugt wird man das Reaktionsgemisch während und gegebenenfalls nach der Bildung der Urethangruppen durch Umsetzung von (a) mit (b) und gegebenenfalls (c), besonders bevorzugt aus der Reaktionsschmelze und vor der vollständigen Ausbildung von Allophanat und/oder Isocyanuratvernetzungen auf Extrudern oder Spritzgußmaschinen zu Folien oder Formkörpern oder im Spinnverfahren zu Fasern verarbeiten. Diese direkte Weiterverarbeitung der Reaktionsmischung ohne eine Granulierung oder Pelletierung und ohne weitgehende oder vollständige Umsetzung der Reaktionsmischung bietet den Vorteil, daß eine Vernetzung durch Bildung beispielsweise von Allophanat- und/oder Isocyanuratstrukturen nur zu einem geringen Ausmaß oder gar nicht eingetreten ist und das Reaktionsgemisch dadurch bei einer erwünscht niedrigen Temperatur zu den Endprodukten wie beispielsweise Folien, Formkörpern oder Fasern verarbeitet werden können.

Bevorzugt kann die Verarbeitung des Reaktionsgemisches somit derart erfolgen, daß man die Reaktionsmischung in erweichtem oder geschmolzenen Zustand während der Umsetzung von (a) mit (b) und gegebenenfalls (c) besonders bevorzugt aus der Reaktionsschmelze und vor der vollständigen Ausbildung von Allophanat und/oder Iscocyanuratvernetzungen, bei einer Temperatur von 60 bis 180 °C, bevorzugt 70 bis 120 °C, auf Extrudern oder Spritzgußmaschinen zu Folien oder Formkörpern oder im Spinnverfahren zu Fasern verarbeitet.

Bevorzugt kann man das Verfahrensprodukt aus dem Extruder, der Spritzgußmaschine oder dem Spinnverfahren zur teilweisen oder vollständigen Ausbildung, besonders bevorzugt vollständigen Ausbildung der Allophanat- und/oder Isocyanuratvernetzungen bei einer Temperatur von 20 bis 120 °C, bevorzugt 80 bis 120 °C für eine Zeitdauer von mindestens 2 Stunden, bevorzugt 12 bis 72 Stunden unter ansonsten üblichen Bedingungen tempern. Durch diese anschließende Temperung der Formkörper, Folien oder Fasern können die Vernetzungen in den Polyisocyanat-Polyadditionsprodukten erhalten werden, die zu den sehr vorteilhaften Eigenschaften der Produkte in Bezug auf die Temperaturstabilität und das Hystereseverhalten nach Belastung führen.

Werden ungesättigte Komponenten (b) und/oder (c) eingesetzt, beispielsweise cis-1,4-Butendiol, so können die Formkörper, Folien oder Fasern nach der Herstellung durch Bestrahlung, beispielsweise durch Elektronenbestrahlung behandelt werden.

Im Folgenden sollen die Komponenten (a) bis (e) beispielhaft dargestellt werden. Die im Folgenden angegebenen Molekulargewichte weisen, soweit nicht genannt, die Einheit g/mol auf.
a) Als organische Isocyanate (a) kommen erfindungsgemäß aliphatische und/oder cycloaliphatische und gegebenenfalls zusätzlich aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens 2 der genannten C₆-Alkylen-diisocyanate, Pentamethylen-diisocyanat-1,5 und Butylen-diisocyanat-1,4, cycloaliphatische Diisocyanate, wie 1-Isocyanato-3,3,5-trimethyl-5-isocyanatomethyl-cyclohexan (Isophoron-diisocyanat), 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische, 1,4- und/oder 1,3-Di(isocyanatomethyl)-cyclohexan, 1,4- und/oder 1,3-Di(isocyanatoethyl)cyclohexan, aromatische Diisocyanate, wie 1,3- und/oder 1,4-Di(isocyanatomethyl)benzol, 2,4-Toluylen-diisocyanat, Gemische aus 2,4- und 2,6-Toluylen-diisocyanat, 4,4'-, 2,4'- und/oder 2,2'-Diphenylmethan-diisocyanat (MDI), Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-(1,2) und 1,5-Naphthylen-diisocyanat. Vorzugsweise verwendet werden Hexamethylen-diisocyanat-1,6.
b) Als gegenüber Isocyanaten reaktive Substanzen (b) mit einer mittleren Funktionalität, d.h. einer über die Komponente (b) gemittelten Funktionalität von 1,8 bis 2,5, vorzugsweise 1,9 bis 2,2, besonders bevorzugt 1,95 bis 2,1, eignen sich beispielsweise Polyhydroxylverbindungen mit Molekulargewichten von 500 bis 8000, vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und aliphatische Polycarbonate, insbesondere solche, aus Diphenylcarbonat und Hexandiol-1,6, hergestellt durch Umesterung, mit den oben genannten Molekulargewichten. Die genannten Polyhydroxylverbindungen können als Einzelkomponenten oder in Form von Mischungen zur Anwendung kommen.
   Die Mischungen zur Herstellung der TPU bzw. die TPU müssen zumindest überwiegend auf difunktionellen gegenüber Isocyanaten reaktiven Substanzen basieren.
   Des weiteren können als gegenüber Isocyanaten reaktive Substanzen (b) auch Polyamine, beispielsweise Amin-terminierte Polyether, z.B. die unter dem Namen Jeffamine® (Texaco Chemical Co.) bekannten Verbindungen eingesetzt werden, wobei die mittlere Funktionalität der Komponente (b) in dem erfindungsgemäßen Bereich liegen sollte.

Geeignete Polyetherole können hergestellt werden nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 reaktive Wasserstoffatome gebunden enthält. Als Alkylenoxide seien z.B. genannt: Ethylenoxid, 1,2-Propylenoxid, Tetrahydrofuran, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-dialkanolamine, beispielsweise N-Methyl-diethanolamin und Diole, z.B. Alkandiole oder Dialkylenglykole mit 2 bis 12 C,Atomen, vorzugsweise 2 bis 6 C-Atomen, wie Ethandiol, Propandiol-1,3, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylen-glykole).

Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist und insbesondere Polyoxytetramethylen-glykole.

Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.

Die im Falle der TPU im wesentlichen linearen Polyetherole besitzen üblicherweise Molekulargewichte von 500 bis 8000, vorzugsweise 600 bis 6000 und insbesondere 800 bis 3500. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Korksäure, Azelainsäure, Sebacinsäure und vorzugsweise Adipinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Alkandiole mit 2 bis 10, vorzugsweise 2 bis 6 Kohlenstoffatomen, wie Ethandiol, Propandiol-1,3, Butandiol-1,4, Pentandiol-1,5, Hexandiol-1,6, Decandiol-1,10, 2,2-Dimethylpropandiol-1,3, Propandiol-1,2 und Dialkylenether-glykole wie Diethylenglykol und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von w-Hydroxycarbonsäuren, beispielsweise (ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Alkandiol-polyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiol-neopentylglykol-polyadipate, Polycaprolactone und insbesondere 1,6-Hexandiol- 1,4-butandiol-polyadipate.

Die Polyesterole besitzen üblicherweise Molekulargewichte (Gewichtsmittel) von 500 bis 6000, vorzugsweise von 800 bis 3500.
c) Als Kettenverlängerungsmittel (c), die üblicherweise Molekulargewichte von kleiner 500 g/mol, bevorzugt 60 bis 499, besonders bevorzugt 60 bis 300 aufweisen, kommen vorzugsweise Alkandiole und/oder Alkendiole und/oder Alkindiole mit 2 bis 12 Kohlenstoffatomen, vorzugsweise mit 2, 3, 4 oder 6 Kohlenstoffatomen, wie z.B. Ethandiol, Propan-1,2- und/oder -1,3-diol, Hexandiol-1,6, und insbesondere Butandiol-1,4 und/oder cis- und/oder trans-1,4-Butendiol und Dialkylenetherglykole wie z.B. Diethylenglykol und Dipropylenglykol in Betracht. Geeignet sind jedoch auch Diester der Terephthalsäure mit Alkandiolen mit 2 bis 4 Kohlenstoffatomen, wie z.B. Terephthalsäure-bis-ethandiol oder -butandiol-1,4 und Hydroxyalkylenether des Hydrochinons, wie z.B. 1,4-Di-(β-hydroxyethyl)-hydrochinon. Gegebenenfalls kann es von Vorteil sein, geringe Mengen, d.h. bis zu 15 Gew.-% der Menge der eingesetzten Kettenverlängerer, an trifunktionellen Verbindungen, beispielsweise Glycerin, Trimethylolpropan und/oder 1,2,6-Hexantriol einzusetzen.

Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1 : 1 bis 1 : 12, insbesondere von 1 : 1,8 bis 1 : 6,4, wobei die Härte und der Schmelzpunkt der TPU mit zunehmendem Gehalt an Diolen ansteigt.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,002 bis 0,1 Teilen pro 100 Teile Polyhydroxylverbindung (b) eingesetzt.
e) Neben Katalysatoren können den Aufbaukomponenten (a) bis (c) auch übliche Hilfsmittel und/oder Zusatzstoffe (e) hinzugefügt werden. Genannt seien beispielsweise oberflächenaktive Substanzen, Flammschutzmittel, Keimbildungsmittel, Oxidationsverzögerer, Stabilisatoren, Gleit- und Entformungshilfen, Farbstoffe und Pigmente, Inhibitoren, Stabilisatoren gegen Hydrolyse, Licht, Hitze oder Verfärbung, anorganische und/oder organische Füllstoffe, Verstärkungsmittel und Weichmacher.

Nähere Angaben über die oben genannten Hilfsmittel- und Zusatzstoffe sind der Fachliteratur zu entnehmen.

Das erfindungsgemäße Verfahren soll anhand der folgenden Beispiele näher dargestellt werden.

### Beispiel 1 (Verhältnis NCO:OH gleich 1,1:1):

100 g (0,051 mol) Polytetrahydrofuran mit einem Molekulargewicht von 2000 und einer Hydroxylzahl von 57,3 mgKOH/g wurden in einem Teflongefäß vorgelegt und auf T=100°C erwärmt. Unter kräftigem Rühren wurden in 10 minütigem Abstand 8,99 g (0,102 mol) cis-1,4-Butendiol, 28,3 g (0,1683 mol) Hexamethylendiisocyanat (HDI) sowie 3 mg Dibutylzinndiacetat als Katalysator zugegeben. Ca. 5 Min. nach Zugabe des Katalysators nahm die Viskosität des Reaktionsgemisches infolge des Molekulargewichtsaufbaus stark zu. Zur Vervollständigung der Reaktion wurde weitere 20 Minuten bei einer Temperatur von 100°C gerührt.

Die Polyurethanschmelze, die entsprechend dem Überschuß an HDI noch freie NCO-Gruppen enthält, wurde direkt nachfolgend ohne Granulierung als Spinnpolymer für den Schmelzspinnprozeß eingesetzt.

Der Spinnprozeß erfolgte mit einer Kolbenspinnanlage. Die Spinntemperatur lag bei 80°C, die Verweilzeit betrug 30 Min. Die erhaltene Faser war nicht klebrig und konnte problemlos aufgespult werden. Nach einer 2-tägigen Lagerung bei Raumtemperatur wurde die Faser 24 h bei einer Temperatur von 100°C getempert, wodurch eine deutliche Eigenschaftsverbesserung erzielt wurde.

Die nach diesem Verfahren hergestellten Polyisocyanat-Polyadditionsprodukte waren nicht mehr in DMA/DMF löslich, wiesen demnach Allophanat- und/oder Isocyanuratvernetzungen auf, und zeigten wesentlich verbesserte Fasereigenschaften.

### Vergleichsbeispiele 2-4:

Polyurethanfasern wurden entsprechend Beispiele 1 hergestellt, mit dem Unterschied, daß das molare Verhältnis von Polytetrahydrofuran: Butendiol: HDI 1:1,5:2,5 (Beispiel 2), 1:2:3 (Beispiele 3) bzw. 1:3:4 (Beispiel 4) betrug.

Die Fasereigenschaften der TPU-Faser sind in der folgenden Tabelle dargestellt:

**Tabelle 1**

| Beispiel | 1 | 2 | 3 | 4 |
|---|---|---|---|---|
| NCO/OH | 1,1:1 | 1:1 | 1:1 | 1:1 |
| η rel¹⁾ | unlöslich | 1,35 | 1,34 | 1,37 |
| Restdehnung 1. Zyklus [%] | 35 | 110 | 95 | 120 |
| Restdehnung 5. Zyklus [%] | 45 | 130 | 115 | 140 |
| Reißkraft [cN/tex] | 7.0 | 3.0 | 3.4 | 3.2 |
| Reißdehnung [%] | 700 | 1100 | 800 | 800 |
| Kraftverlust bw5 | 0,115 | 0,24 | 0,24 | 0,22 |
| HDT [°C] | 125 | 80 | 90 | 95 |

| | | | | |
|---|---|---|---|---|
| 1) 0.5 Gew.-% Lösung in DMA, η: Viskosität | | | | |

Die Fasereigenschaften wurden nach DIN 53835 bestimmt.

Im Vergleich zu konventionell schmelzgesponnenen TPU-Fasern zeigt die erfindungsgemäße allophanatvernetzte TPU-Faser signifikant verbesserte Fasereigenschaften.
Durch die kovalente Vernetzung der Hartsegmente über Allophanat-Bindungen konnte eine deutliche Verbesserung des Hystereseverhaltens (geringere Restdehnung und Kraftverlust), eine Verdopplung der Reißkraft sowie eine höhere HDT-Temperatur erzielt werden.

## Patentansprüche

1. Reaktionsmischung enthaltend (a) Isocyanate, (b) gegenüber Isocyanate reaktive Verbindungen mit einer mittleren Funktionalität von 1,8 bis 2,5 und einem Molekulargewicht von 500 bis 8000 g/mol und gegebenenfalls (c) Kettenverlängerungmittel mit einem Molekulargewicht von kleiner 500 g/mol, (d) Katalysatoren und/oder (e) übliche Hilfs- und/oder Zusatzstoffe, dadurch gekennzeichnet, daß die Isocyanate (a) aliphatische und/oder cycloaliphatische Isocyanate enthalten und das Verhältnis der Isocyanatgruppen enthalten in (a) zu den gegenüber Isocyanaten reaktiven Gruppen enthalten in (b) plus gegebenenfalls (c) 1 : 0,98 bis 1 : 0,8 beträgt.

2. Reaktionsmischung nach Anspruch 1, dadurch gekennzeichnet, daß als Isocyanat (a) Hexamethylendiisocyanat enthalten ist.

3. Verfahren zur Herstellung von Polyisocyanat-Polyadditionsprodukten durch Umsetzung von (a) Isocyanaten mit (b) gegenüber Isocyanaten reaktiven Verbindungen mit einer mittleren Funktionalität von 1,8 bis 2,5 und einem Molekulargewicht von 500 bis 8000 g/mol und gegebenenfalls (c) Kettenverlängerungmitteln mit einem Molekulargewicht von kleiner 500 g/mol, (d) Katalysatoren und/oder (e) üblichen Hilfs- und/oder Zusatzstoffen, dadurch gekennzeichnet, daß man Isocyanate (a) enthaltend aliphatische und/oder cycloaliphatische Isocyanate einsetzt und das Verhältnis der Isocyanatgruppen enthaltend in (a) zu den gegenüber Isocyanaten reaktiven Gruppen enthaltend in (b) plus gegebenenfalls (c) 1 : 0,98 bis 1 : 0,8 beträgt.

4. Verfahren nach Anspruch 3, dadurch gekennzeichnet, daß man als Isocyanat (a) Hexamethylendiisocyanat einsetzt.

5. Verfahren nach Anspruch 3, dadurch gekennzeichnet, daß man das Reaktionsgemisch während und gegebenenfalls nach der Bildung der Urethangruppen durch Umsetzung von (a) mit (b) und gegebenenfalls (c) auf Extrudern oder Spritzgußmaschinen zu Folien oder Formkörpern oder im Spinnverfahren zu Fasern verarbeitet.

6. Verfahren nach Anspruch 3, dadurch gekennzeichnet, daß man die Reaktionsmischung in erweichtem oder geschmolzenem Zustand während der Umsetzung von (a) mit (b) und gegebenenfalls (c) bei einer Temperatur von 60 bis 180 °C auf Extrudern oder Spritzgußmaschinen zu Folien oder Formkörpern oder im Spinnverfahren zu Fasern verarbeitet.

7. Verfahren nach einem der Ansprüche 5 oder 6, dadurch gekennzeichnet, daß man das Verfahrensprodukt aus dem Extruder, der Spritzgußmaschine oder dem Spinnverfahren zur Ausbildung der Allophanat- und/oder Isocyanuratvernetzungen bei einer Temperatur von 20 bis 120 °C für eine Zeitdauer von 12 bis 72 Stunden tempert.

8. Polyisocyanat-Polyadditionsprodukte erhältlich durch ein Verfahren gemäß einem der Ansprüche 3 bis 7.

9. Polyisocyanat-Polyadditionsprodukte enthaltend Allophanat und/oder Isocyanuratstrukturen erhältlich durch ein Verfahren gemäß einem der Ansprüche 3 bis 7.

10. Formkörper, Spritzgußartikel, Schläuche, Kabelummantellungen und Folien erhältlich durch ein Verfahren gemäß einem der Ansprüche 3 bis 7.
